# EUROPÄISCHE PATENTSCHRIFT

(11) **EP 2 536 987 B1**
(45) Veröffentlichungstag und Bekanntmachung des Hinweises auf die Patenterteilung: **16.04.2014**
(21) Anmeldenummer: 11704196.2
(22) Anmeldetag: 18.01.2011
(51) Int. Cl.: F27B 3/24, F27B 3/28, F27D 1/12, F27D 21/00, F27D 21/04, G01L 1/24

(54) **INJEKTORKÜHLBLOCK ZUR HALTERUNG MINDESTENS EINES INJEKTORS**
INJECTOR COOLING BLOCK FOR HOLDING AT LEAST ONE INJECTOR
BLOC DE REFROIDISSEMENT D'INJECTEUR SERVANT DE SUPPORT À AU MOINS UN INJECTEUR

(30) Priorität: 18.02.2010 DE 102010008508; 29.06.2010 DE 102010025562
(43) Veröffentlichungstag der Anmeldung: 26.12.2012
(73) Patentinhaber: SMS Siemag AG, 40237 Düsseldorf (DE)
(72) Erfinder: FEHLEMANN, Gereon, 40489 Düsseldorf (DE); LIEFTUCHT, Dirk, 48739 Legden (DE)
(74) Vertreter: Klüppel, Walter
(86) Internationale Anmeldenummer: PCT/EP2011/050625
(87) Internationale Veröffentlichungsnummer: WO 2011/101191

(56) Entgegenhaltungen:
- WO-A1-99/67613
- WO-A1-2010/003694
- WO-A2-2004/015349
- DE-A1- 3 807 306
- DE-B4-102005 013 924

## Beschreibung

Die Erfindung betrifft einen Injektorkühlblock zur Halterung mindestens eines Injektors zur Einbringung eines Mediums in ein metallurgisches Gefäß, insbesondere in einen Elektrolichtbogenofen, wobei der Injektorkühlblock in oder an einer Wandung des metallurgischen Gefäßes angeordnet ist, wobei der Injektorkühlblock mindestens eine Platte aufweist, in der ein von einem Kühlmedium durchströmbarer Kühlkanal oder eine Kühlbohrung angeordnet ist, und wobei der Kühlkanal bzw. die Kühlbohrung einen Heißbereich von einem Kaltbereich trennt.

Ein Injektorkühlblock dieser Art ist aus der WO 2010/003694 A1 bekannt.

Der Injektorkühlblock stellt eine Halterung dar, die der Aufnahme mindestens eines Injektors in einem metallurgischen Gefäß dient, insbesondere in einem Elektrolichtbogenofen. Mit dem Injektor werden Medien wie Gase und/oder Feststoffe in das metallurgische Gefäß eingebracht, wobei mittels des Kühlmittelführungen aufweisenden Injektorkühlblocks der jeweilige Injektor über eine Öffnung geschützt an oder in der Gefäßwand des metallurgischen Gefäßes angeordnet ist.

Der Injektorkühlblock besteht zumeist aus Kupfer, wobei ein innenliegender Kühlwasserkanal vorgesehen ist. Durch die Wasserkühlung und die große Wärmeleitfähigkeit des Kupfers wird der Kupferwerkstoff auf einer Temperatur gehalten, die eine Zerstörung des Injektorkühlblocks im Innenraum eines Elektrolichtbogenofens verhindert. Der Injektorkühlblock hat eine Öffnung, durch die mit Hilfe eines Injektionssystems Gase und/oder Feststoffe in den Elektrolichtbogenofen eingeblasen werden können. Der Injektorkühlblock dient dabei als Schutz für das Injektionssystem vor mechanischer Beanspruchung durch Schrott und Legierungen, starker Wärmeeinwirkung durch Strahlung der heißen Metallschmelze und des Lichtbogens und Kontakt zur schmelzflüssigen Phase. Weiterhin schließt das wassergekühlte Element als spezielle Baueinheit eines Ofenwandelements den Ofeninnenraum nach außen hin ab.

Vorbekannte Lösungen weisen zumeist keine Einrichtungen auf, mit denen die Temperaturen bzw. die Spannungen (bzw. Dehnungen) in der Gehäusewandung des Injektorkühlblocks erfasst werden können. Sofern überhaupt Messungen erfolgen, finden diese mit einem nur punktuell messenden Sensor statt.

Demgemäß ist es schwierig bis unmöglich, gesicherte Aussagen über den Zustand und die Belastung des Injektorkühlblocks zu machen, insbesondere was die Belastungen über die flächige Ausdehnung des Blocks anbelangt.

Grundsätzlich bekannt ist es, zur Messung von thermischen Größen Lichtwellenleiter einzusetzen, was beispielsweise in der WO 2004/015349 A2 und in der WO 2007/079894 A1 beschrieben ist. In der EP 0 208 067 B1 wird der Einsatz von Strahlungsmessgeräten vorgeschlagen. Ähnliche Lösungen sind in der WO 99/67613 A1 und in der DE 38 07 306 A1 beschrieben.

Der vorliegenden Erfindung liegt die Aufgabe zugrunde, einen Injektorkühlblock der eingangs genannten Art so fortzubilden, dass es möglich wird, thermische und/oder mechanische Belastungen des Injektorkühlblocks zu erfassen und so den Betrieb der Anlage genauer überwachen zu können. Es soll also ein effizientes Überwachungselements für den Injektorkühlblock vorgeschlagen werden, mit dem eine kostengünstige Überwachung ermöglicht wird. Dabei soll eine kontinuierliche und präzise Überwachung der Temperaturen bzw. der mechanischen Spannungen des Injektorkühlblocks möglich sein, die sich kostengünstig realisieren lässt.

Die Lösung dieser Aufgabe durch die Erfindung ist dadurch gekennzeichnet, dass in dem Heißbereich der Platte des Injektorkühlblocks mindestens ein Messelement zur Messung der Temperatur und/oder der mechanischen Dehnung angeordnet ist, wobei das Messelement mindestens einen Lichtwellenleiter umfasst, der im Heißbereich integriert oder am Heißbereich befestigt ist, wobei der Lichtwellenleiter in einer Bohrung im Heißbereich angeordnet ist, wobei die Bohrung beabstandet von der einer Schmelze zugewandten Oberfläche des Heißbereichs verläuft oder wobei der Lichtwellenleiter in einer Nut im Heißbereich angeordnet, wobei die Nut durch ein Verschlusselement verschlossen ist, das den Lichtwellenleiter im Nutgrund hält, wobei das Verschlusselement ein in die Nut eingesetztes oder ein in die Nut eingegossenes Metallteil ist oder wobei der Lichtwellenleiter in einer metallischen Schicht angeordnet ist, wobei die metallische Schicht am oder im Heißbereich angeordnet ist und wobei der Lichtwellenleiter vollständig vom Material der Schicht umgeben ist.

Wichtig ist, dass der Lichtwellenleiter für eine Temperaturmessung locker verlegt ist, so dass er sich im Falle einer Temperatur-Erhöhung ungehindert ausdehnen kann. Für die Temperaturmessung ist der Lichtwelleleiter deshalb nicht fest mit dem ihn umgebenden Material fest verbunden. Für eine Dehnungsmessung hingegen ist der Lichtwellenreiter vorzugsweise über seine gesamte Länge mit dem ihn umgebenden Material fest verbunden, so dass der Lichtwellenleiter im Falle einer Ausdehnung des Materials in gleichem Maße mit gedehnt wird und umgekehrt - im Falle einer Schrumpfung des Materials - in gleichem Maße schrumpft.

Der Lichtwellenleiter kann in einem diesen umgebenden Rohr angeordnet sein.

Alternativ können die Lichtwellenleiter in Modulen, das heißt in vorgefertigten baulichen Einheiten vorverlegt sein. Im Unterschied zu einer direkten Verlegung der Lichtwellenleiter ist die Montage der Module auf dem Elektrodenarm sehr einfach möglich; die Module werden einfach auf den Elektrodenarm aufgeklebt oder geschweißt, vorzugsweise durch Rührverschweißen.

Die genannte Schicht kann galvanisch an den oder in den Heißbereich aufgebracht sein. Sie kann aus Kupfer, Chrom oder Nickel bestehen.

Der Lichtwellenleiter und das gegebenenfalls ihn umgebende Rohr ist gemäß einer bevorzugten Ausführungsform mäanderförmig im Heißbereich verlegt, um in der Fläche der Platte Temperaturen bzw. Spannungen / Dehnungen erfassen zu können.

Durch die Einbringung von Lichtwellenleitern in die Wandungen des Injektorkühlblocks und hier insbesondere an den Kühlbohrungen bzw. an den Kühlkanälen können Temperaturen und Spannungen der Schichten des Gehäuses als Temperatur- bzw. Spannungsprofil über die Bauteiloberfläche gemessen werden. Ebenfalls erfasst werden dynamische Änderungen bedingt durch Strömungen in der Schmelze bzw. Schlacke. Hierdurch wird eine Beurteilung des Verschleißzustandes und der vorliegenden Strömungs-Belastungssituation des Injektors durch die Temperatur und/oder die Spannung möglich. Das vorgeschlagene Konzept ermöglicht eine Darstellung der thermischen bzw. mechanischen Belastung des Injektors über seine Oberfläche im jeweiligen Betriebszustand.

Um genaue Messungen mit dem Lichtwellenleiter durchführen zu können, ist es vorteilhaft, dass der Lichtwellenleiter oder das Metallrohr, das den Lichtwellenleiter umgibt, eng an dem Bauteil bzw. Medium anliegt, und zwar möglichst ohne (isolierenden) Luftzwischenraum. Dies gilt insbesondere dann, wenn per Lichtwellenleiter im Injektorkühlblock die Temperatur bestimmt werden soll.

Damit auch eine Dehnung (Spannung) der Wandung des Injektorkühlblocks gemessen werden kann, ist es vorteilhaft, wenn der Lichtwellenleiter bzw. das diesen umgebende Rohr mit der Bohrung bzw. dem Nutgrund fest verbunden ist.

Sofern eine Nut vorgesehen wird, in der der Lichtwellenleiter bzw. das diesen umgebende Rohr verlegt wird, ist bevorzugt vorgesehen, dass ein Füllstück zum Verschließen der Nut zum Einsatz kommt, das aus Metall bestehen kann. Es kann passgenau zur Form der Nut ausgebildet sein. Dabei kann auch vorgesehen werden, dass das Füllstück durch ein Vergießen oder Spritzen des Materials des Füllstücks in die Nut erzeugt ist. Hiernach wird also das Material, aus dem das Füllstück besteht, gießfähig oder spritzfähig gemacht und dann in die Nut, in die der Lichtwellenleiter ggf. samt Rohr eingelegt wurde, eingegossen bzw. eingespritzt.

Die vorgeschlagene Ausgestaltung bietet also die Möglichkeit, Spannungszustände in der gemessenen Ebene zu erfassen und so die mechanische Belastung der Bauteile zu erfassen.

Die Technologie der Messung von Temperaturen und Dehnungen bzw. Spannungen ist als solche bekannt (auch unter der Bezeichnung "optischer Dehmessstreifen"), so dass insoweit auf den Stand der Technik verwiesen wird.

Der Lichtwellenleiter steht hierzu bevorzugt mit einer Auswerteeinheit in Verbindung, in der die Temperaturverteilung in der Wandung des Injektorkühlblocks ermittelt werden kann. Mit dieser Auswerteeinheit kann auch entsprechend die mechanische Belastung der Wandung des Injektorkühlblocks erfasst werden.

In der Zeichnung ist ein Ausführungsbeispiel der Erfindung dargestellt.
Es zeigern:
- Fig. 1: die Ansicht "A" (s. Fig. 2) eines Injektorkühlblocks eines Elektrolichtbogenofens,
- Fig. 2: den Injektorkühlblock im Schnitt II-II gemäß Fig. 1 und
- Fig. 3: die Einzelheit "X" gemäß Fig. 2.

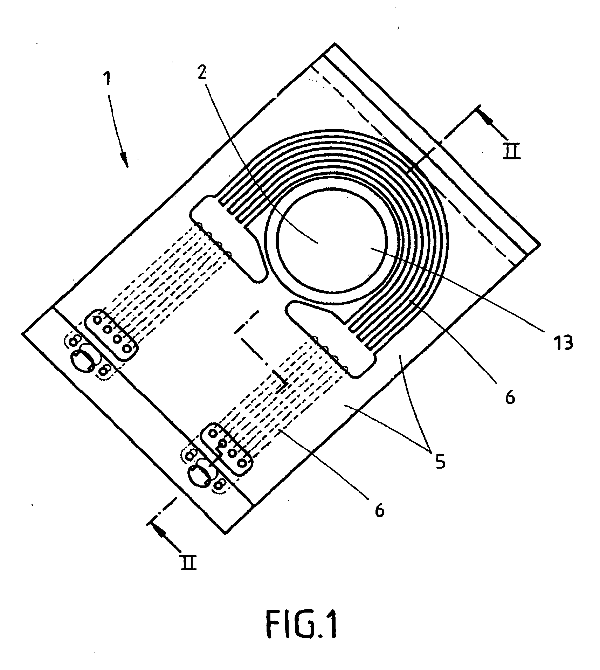

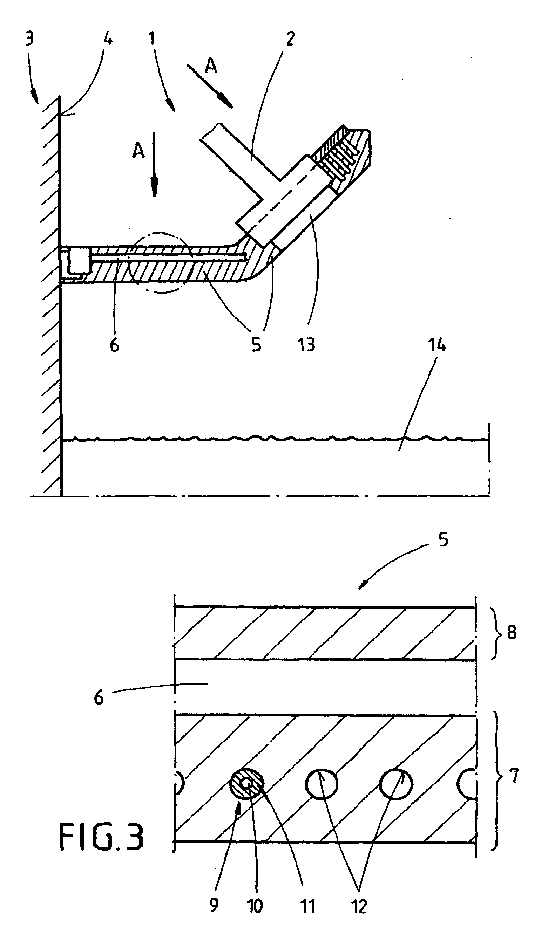

In den Figuren 1 und 2 ist ein Injektorkühlblock 1 zu sehen, der als Halterung fungiert, mit der ein Injektor 2 in einem metallurgischen Gefäß 3 gehalten wird, vorliegend in einem Elektrolichtbogenofen. Mit dem Injektor 2 werden Medien wie Gase und/oder Feststoffe in das metallurgische Gefäß 3 eingebracht, wobei mittels des Kühlmittelführungen 6 aufweisenden Injektorkühlblocks 1 der Injektor 2 über eine Öffnung 13 geschützt an oder in der Wandung 4 des Gefäßes 3 angeordnet ist.

Der Injektorkühlblock 1 besteht aus einem stark wärmeleitenden, warmgewalzten und/oder geschmiedeten Werkstoff wie z. B. Kupfer oder einer Kupferlegierung (wie z. B. CuAg, CuCrZr oder auch CuNiBe). Entsprechend ist vorgesehen, dass bei der Herstellung des Injektorkühlblocks 1 ein stark wärmeleitender Werkstoff wie z. B. Kupfer oder eine Kupferlegierung durch ein Warmwalzen und/oder Schmieden umgeformt und warmverfestigt wird. Es wird dadurch auf einfache Weise durch das gewalzte oder geschmiedete gut wärmeleitende Material wie u. a. Kupfer ein Werkstoff mit sehr guter Homogenität, hoher Wärmeleitfähigkeit und großer Festigkeit bereit gestellt. Der Injektorkühlblock 1 kann zusätzlich durch Schmieden und/oder Walzen kaltverfestigt ausgebildet sein.

Der dargestellte Injektorkühlblock 1 besteht aus zwei in einem Winkel zueinander stehenden Platten 5, die aus einem gemeinsamen Plattenelement gefertigt sind. Die Platte 5 kann dabei mit Hilfe einer Biegevorrichtung entsprechend einem vorgegebenen Winkel gebogen werden.

Der exemplarische Aufbau einer Platte 5 des Injektorkühlblocks 1 geht aus Fig. 3 hervor. Die Platte 5 kann in einen Heißbereich 7 und in einen Kaltbereich 8 unterteilt werden, wobei die beiden Bereiche 7, 8 durch einen Kühlkanal 6 unterteilt bzw. voneinander abgeteilt sind.

In den Heißbereich 7 der Platte 5 sind Bohrungen 12 eingebracht, in denen ein Messelement 9 untergebracht ist (dargestellt nur für eine Bohrung, vorgesehen aber für alle Bohrungen 12), mit dem die Temperatur und/oder die mechanische Spannung in der Platte 5 ermittelt werden kann. Bei diesem Messelement 9 handelt es sich um einen Lichtwellenleiter 10, der in einem Rohr 11 untergebracht und durch dieses geschützt wird.

Der Lichtwellenleiter 10 hat typischer Weise einen Durchmesser von z. B. 0,12 mm; mit Hüllrohr 11 ergibt sich zumeist ein Durchmesser im Bereich von 0,8 mm bis 2,0 mm.

Wie in Fig. 3 gesehen werden kann, ist der Lichtwellenleiter also im Heißbereich 7 untergebracht, der rückseitig vom Kühlmedium gekühlt wird, das durch den Kühlkanal 6 geleitet wird.

Der Lichtwellenleiter 10 besteht aus einer Grundfaser, die in die Bohrungen 12 oder in ähnliche Kanäle oder Nuten eingebracht wird. Der Lichtwellenleiter 10 kann dabei Temperaturen bis zu 800 °C Dauerbelastung aushalten.

Um die Robustheit der Signalübertragung im Lichtwellenleiter 10 und zu nicht dargestellten Auswertegeräten zu erhöhen, werden die Lichtwellen über Linsenstecker von dem Gehäuse des metallurgischen Gefäßes 3 in der jeweiligen Ruheposition zur Auswerteeinheit geführt.

Neben der dargestellten Möglichkeit der Unterbringung des Lichtwellenleiters 10 in Bohrungen 12 besteht auch die bevorzugte Möglichkeit, eine Nut in den Heißbereich 7 der Platte 5 einzuarbeiten und den Lichtwellenleiter 10 - ggf. samt Rohr 11 - im Nutgrund zu verlegen. Die Nut kann dann wieder verschlossen werden, wozu die oben erwähnten Maßnahmen eingesetzt werden können.

Ebenfalls möglich ist die Einbringung des Lichtwellenleiters 10 - ggf. samt Rohr 11 - in eine metallische Schicht, die auf der Vorderseite der Platte 5 bzw. des Heißbereichs 7 aufgebracht wird, dem Inneren des Gefäßes 3 , d. h. der Schmelze 14, zugewandt.

Die Schicht kann aufgalvanisiert werden, wobei der Lichtwellenleiter 10 samt Rohr 11 vollständig ummantelt wird. Die galvanische Schicht kann beispielsweise aus Kupfer, aus Chrom oder aus Nickel bestehen.

Bei mäanderförmiger Verlegung des Lichtwellenleiters 10 kann die Fläche der Platte 5 gut bezüglich der Temperaturverteilung und der mechanischen Belastung überwacht werden.

Der Lichtwellenleiter 10 ist mit einem nicht dargestellten Temperaturerfassungssystem bzw. einem Erfassungssystem für mechanische Spannungen bzw. Dehnungen verbunden. Mittels des Erfassungssystems wird Laserlicht erzeugt, das in den Lichtwellenleiter 10 eingespeist wird. Die von der Lichtwellenleitfaser 10 gesammelten Daten werden mittels des Erfassungssystems in Temperaturen oder Spannungen umgerechnet und den verschiedenen Messorten zugeordnet.

Die Auswertung kann beispielsweise nach dem sog. Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detailierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 1 mm bis 5 mm liegen.

Alternativ kann zur Messung der Temperatur auch das "Optical-Frequency-Domain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters 10 erzeugen.

### Bezugszeichenliste:

- 1: Injektorkühlblock
- 2: Injektor
- 3: metallurgisches Gefäß (Elektrolichtbogenofen)
- 4: Wandung
- 5: Platte
- 6: Kühlkanal / Kühlbohrung
- 7: Heißbereich
- 8: Kaltbereich
- 9: Messelement
- 10: Lichtwellenleiter
- 11: Rohr
- 12: Bohrung
- 13: Öffnung
- 14: Schmelze

## Patentansprüche

1. Injektorkühlblock (1) zur Halterung mindestens eines Injektors (2) zur Einbringung eines Mediums in ein metallurgisches Gefäß (3), wobei der Injektorkühlblock (1) in oder an einer Wandung (4) des metallurgischen Gefäßes (3) angeordnet ist, wobei der Injektorkühlblock (1) mindestens eine Platte (5) aufweist, in der ein von einem Kühlmedium durchströmbarer Kühlkanal oder eine Kühlbohrung (6) angeordnet ist, und wobei der Kühlkanal bzw. die Kühlbohrung (6) einen Heißbereich (7) von einem Kaltbereich (8) trennt,
wobei in dem Heißbereich (7) mindestens ein Messelement (9) zur Messung der Temperatur und/oder der mechanischen Dehnung angeordnet ist, wobei das Messelement (9) mindestens einen Lichtwellenleiter (10) umfasst, der im Heißbereich (7) integriert oder am Heißbereich (7) befestigt ist,
wobei der Lichtwellenleiter (10) in einer Bohrung (12) im Heißbereich (7) angeordnet ist, wobei die Bohrung (12) beabstandet von der einer Schmelze (14) zugewandten Oberfläche des Heißbereichs (7) verläuft, oder
wobei der Lichtwellenleiter (10) in einer Nut im Heißbereich (7) angeordnet, wobei die Nut durch ein Verschlusselement verschlossen ist, das den Lichtwellenleiter (10) im Nutgrund hält, wobei das Verschlusselement ein in die Nut eingesetztes oder ein in die Nut eingegossenes Metallteil ist, oder wobei der Lichtwellenleiter (10) in einer metallischen Schicht angeordnet ist, wobei die metallische Schicht am oder im Heißbereich (7) angeordnet ist und wobei der Lichtwellenleiter (10) vollständig vom Material der Schicht umgeben ist.

2. Injektorkühlblock nach Anspruch 1,
**dadurch gekennzeichnet,**
**dass** das Messelement in Form des Lichtwellenleiters (3) zum Zwecke der Temperaturmessung locker spannungs- und bewegungsfrei in oder an dem Injektorblock angeordnet oder zum Zwecke der Dehnungsmessung, vorzugsweise über seine gesamte Länge, in fester Verbindung mit dem Material des Injektorkühlblocks zur Aufnahme von dessen Dehnungen angeordnet ist.

3. Injektorkühlblock nach Anspruch 2,
**dadurch gekennzeichnet,**
**dass** der Lichtwellenleiter (3) in einem Modul angeordnet ist, welches in fester Verbindung mit der Platte (5) ist, wobei der Lichtwellenleiter zum Zwecke der Temperaturmessung spannungs- und bewegungsfrei oder zum Zwecke der Dehnungsmessung fest eingebettet in dem Modul angeordnet ist.

4. Injektorkühlblock nach Anspruch 2,
**dadurch gekennzeichnet,**
**dass** der Lichtwellenleiter (10) zur Temperaturmessung locker in einem den Lichtwellenleiter umgebenden Rohr (11) verlegt ist oder zur Dehnungsmessung ohne umgebenes Rohr mit direktem Kontakt zu dem umgebenden Material in dem Material angeordnet ist.

5. Injektorkühlblock nach Anspruch 1,
**dadurch gekennzeichnet,**
**dass** die Schicht galvanisch an den oder in den Heißbereich (7) aufgebracht ist.

6. Injektorkühlblock nach einem der Ansprüche 1 bis 5,
**dadurch gekennzeichnet,**
**dass** die Schicht aus Metall, insbesondere aus Kupfer, Chrom oder Nickel, besteht.

7. Injektorkühlblock nach einem der Ansprüche 1 bis 6,
**dadurch gekennzeichnet,**
**dass** der Lichtwellenleiter (10) und das gegebenenfalls ihn umgebende Rohr (11) mäanderförmig im Heißbereich (7) verlegt sind.

## Claims

1. Injector cooling block (1) for mounting at least one injector (2) for introduction of a medium into a metallurgical vessel (3), wherein the injector cooling block (1) is arranged in or at a wall (4) of the metallurgical vessel (3), wherein the injector cooling block (1) comprises at least one plate (5) in which a cooling channel or a cooling bore (6), which can be flowed through by a cooling medium, is arranged and wherein the cooling channel or the cooling bore (6) separates a hot region (7) from a cold region (8),
wherein at least one measuring element (9) for measuring the temperature and/or the mechanical strain is arranged in the hot region (7), wherein the measuring element (9) comprises at least one optical waveguide (10) which is integrated in the hot region (7) or fastened to the hot region (7),
wherein the optical waveguide (10) is arranged in a bore (12) in the hot region (7), wherein the bore (12) runs at a spacing from the surface of the hot region (7) facing a melt (14), or
wherein the optical waveguide (10) is arranged in a groove in the hot region (7), wherein the groove is closed by a closure element which keeps the optical waveguide (10) in the bottom of the groove, wherein the closure element is a metal part inserted into the groove or cast in place in the groove, or
wherein the optical waveguide (10) is arranged in a metallic layer, wherein the metallic layer is arranged at or in the hot region (7) and wherein the optical waveguide (10) is completely surrounded by the material of the layer.

2. Injector cooling block according to claim 1, **characterised in that** the measuring element in the form of the optical waveguide (3) is for the purpose of temperature measurement arranged loosely free of stress and movement in or at the injector block or is for the purpose of strain measurement arranged, preferably over its entire length, in fixed connection with the material of the injector block for picking up the elongations thereof.

3. Injector cooling block according to claim 2, **characterised in that** the optical waveguide (3) is arranged in a module, which is in fixed connection with the plate (5), wherein the optical waveguide is for the purpose of temperature measurement arranged free of stress and movement in the module or for the purpose of strain measurement arranged to be fixedly embedded in the module.

4. Injector cooling block according to claim 2, **characterised in that** the optical waveguide (10) is for temperature measurement placed loosely in a tube (11) surrounding the optical waveguide or is for strain measurement arranged in the surrounding material in direct contact therewith without a surrounding tube.

5. Injector cooling block according to claim 1, **characterised in that** the layer is applied by plating at or in the hot region (7).

6. Injector cooling block according to any one of claims 1 to 5, **characterised in that** the layer consists of metal, particularly of copper, chromium or nickel.

7. Injector cooling block according to any one of claims 1 to 6, **characterised in that** the optical waveguide (10) and the tube (11) optionally surrounding it are placed in meander shape in the hot region (7).

## Revendications

1. Bloc de refroidissement d'injecteur (1) servant de support pour au moins un injecteur (2) destiné à introduire un milieu dans une cuve métallurgique (3), le bloc de refroidissement d'injecteur (1) étant disposé dans ou contre une paroi (4) de la cuve métallurgique (3), le bloc de refroidissement d'injecteur (1) présentant au moins une plaque (5) dans laquelle est disposé un canal de refroidissement qui peut être traversé par un milieu de refroidissement ou un alésage de refroidissement (6), et le canal de refroidissement, respectivement l'alésage de refroidissement (6) séparant une zone chaude (7) d'une zone froide (8) ; dans lequel, dans la zone chaude (7), est disposé au moins un élément de mesure (9) pour la mesure de la température et/ou de la dilatation mécanique, l'élément de mesure (9) comprenant au moins une fibre optique (10) qui est intégrée dans la zone chaude (7) ou qui est fixée à la zone chaude (7) ; dans lequel la fibre optique (10) est disposée dans un alésage (12) dans la zone chaude (7), l'alésage (12) s'étendant à l'écart de la surface de la zone chaude (7) tournée vers une masse fondue (14) ; ou dans lequel la fibre optique (10) est disposée dans une rainure dans la zone chaude (7), la rainure étant fermée par un élément de fermeture qui maintient la fibre optique (10) dans la base de la rainure, l'élément de fermeture représentant une pièce métallique insérée dans la rainure ou une pièce métallique coulée dans la rainure ; ou dans lequel la fibre optique (10) est disposée dans une couche métallique, la couche métallique étant disposée contre ou dans la zone chaude (7) et la fibre optique (10) étant entourée complètement par la matière de la couche.

2. Bloc de refroidissement d'injecteur selon la revendication 1, **caractérisé en ce que** l'élément de mesure est disposé sous la forme de la fibre optique (3) à des fins de mesure de la température de manière lâche en l'absence de tensions et de mouvements dans ou contre le bloc d'injecteur et à des fins de mesure de la dilatation, de préférence sur toute sa longueur, en liaison à demeure avec la matière du bloc de refroidissement d'injecteur pour absorber les dilatations dudit bloc.

3. Bloc de refroidissement d'injecteur selon la revendication 2, **caractérisé en ce que** la fibre optique (3) est disposée dans un module qui est relié à demeure à la plaque (5), la fibre optique étant disposée, à des fins de mesure de la température, en l'absence de tensions et de mouvements ou bien à des fins de mesure de la dilatation à l'état incorporé à demeure dans le module.

4. Bloc de refroidissement d'injecteur selon la revendication 2, **caractérisé en ce que** la fibre optique (10) est posée, pour la mesure de la température, de manière lâche dans un tube (11) qui entoure la fibre optique ou est disposée, pour la mesure de la dilatation, dans la matière en l'absence d'un tube qui l'entoure, en contact direct avec la matière environnante.

5. Bloc de refroidissement d'injecteur selon la revendication 1, **caractérisé en ce que** la couche est appliquée par voie galvanique contre ou dans la zone chaude (7).

6. Bloc de refroidissement d'injecteur selon l'une quelconque des revendications 1 à 5, **caractérisé en ce que** la couche est constituée d'un métal, en particulier de cuivre, de chrome ou de nickel.

7. Bloc de refroidissement d'injecteur selon l'une quelconque des revendications 1 à 6, **caractérisé en ce que** la fibre optique (10) et le tube (11) qui l'entoure le cas échéant sont posés en formant des méandres dans la zone chaude (7).
